# EUROPEAN PATENT APPLICATION

(11) **EP 2 476 596 A1**
(43) Date of publication of application: **18.07.2012**
(21) Application number: 11150713.3
(22) Date of filing: 12.01.2011
(51) Int. Cl.: B60W 20/00, B60W 30/18, B60W 50/08, B60W 10/08, B60W 10/30

(54) **Energy efficient driving assistance**

(71) Applicant: Harman Becker Automotive Systems GmbH, 76307 Karlsbad (DE)
(72) Inventor: Scholl, Kay-Ulrich, 76307, Karlsbad (DE)
(74) Representative: Sticht, Andreas

(57) **Abstract**

Methods and systems are provided which manage a use of an electric system (14, 15, 16, 17, 18) of a vehicle, said electric system comprising a generator (14) based on route information.

## Description

### Technical Field

This application relates to systems and methods for energy efficient driving assistance in vehicles comprising a generator, the generator being capable of converting kinetic energy of the vehicle to electrical energy.

### Background Art

The reduction of energy consumption in vehicles, for example cars, has become more and more important in the recent years. Besides conventional fuel, other types of energy for powering vehicles, in particular electrical energy, have become more and more important. For example, so-called hybrid cars combine a conventional combustion engine with an electric motor, and also purely electric cars using only an electric motor are already in use.

Besides optimizing the construction of vehicles, such that driving them consumes less energy, also the driving behaviour plays an important role in energy consumption. For example, driving at very high speeds or driving with frequent accelerations and decelerations tends to be more energy consuming than driving at a lower speed, in particular a constant speed.

Therefore, there is a continuing need for systems and methods which assist in energy efficient driving.

### Short Summary of the Invention

According to embodiments, this need is addressed by a method and a system as defined in the independent claims. The dependent claims define further embodiments.

In an embodiment, a method is provided, comprising: obtaining route information describing a route to be taken by a vehicle, and managing a use of an electric system of said vehicle, said electric system comprising a generator, based on said route information.

By using the route information, the use of the electric system can be adapted to the route, for example to ascending or descending slopes, upcoming speed limits or curves in the road.

Said managing may comprise instructing a driver of the vehicle to use the generator for decelerating the vehicle. In this way, when the vehicle is decelerated, the generator is used for converting the kinetic energy of the vehicle to electric energy. For example, the instructing may comprise instructing the driver to use the generator for deceleration at a point where its target velocity at a target location can be reached using only the generator for deceleration. In other words, no brakes are additionally used. In this way, the conversion of kinetic energy to electric energy may be brought at least approximately to a maximum.

In an embodiment, said instructing may also comprise instructing the driver to use said generator for deceleration when the vehicle runs downhill.

In some embodiments, the electric system may comprise one or more loads, and the managing may comprise determining activation times of at least one load of said loads depending on when said generator generates electrical energy. For example, the at least one load may preferably be activated when the generator generates electrical energy. In this way, the electrical energy generated by the generator may be used directly and need not be stored for example in a battery, which generally leads to losses. "Preferably" in this context means e.g. that the at least one load is activated as much as possible only when the generator generates electrical energy to achieve a certain goal associated with the load. For example, the at least one load may comprise at least one of an air conditioning, a heating, a rear window defroster and a side mirror defroster. Such loads need not be activated permanently to achieve a respective goal, the goal in the examples above being for example cooling or heating the interior of the vehicle to a selected temperature, defrosting or defogging the rear window or defrosting or defogging a side mirror, respectively. Therefore, in the currently discussed embodiments, the respective load is activated preferably when the generator generates electrical energy. However, in some cases, for example when the vehicle runs with a constant speed over an extended period of time without using the generator, it may be necessary to activate the at least one load also during time periods when the generator does not generate electrical energy.

In an embodiment, said obtaining said route information may comprise obtaining said route information from a navigation system, for example based on maps stored in the navigation system. In other embodiments, the route information may be obtained from other sources, for example a camera mounted to the vehicle, or as information received via wireless signals.

A system according to an embodiment comprises a route information obtaining unit configured to obtain route information describing a route to be taken by vehicle, and a control unit configured to manage a use of an electrical system of the vehicle, the electric system comprising a generator, based on the route information.

With such a system, the route information may be used for using the generator efficiently to generate energy.

The route information obtaining units may comprise a navigation system.

In an embodiment, the system is configured to implement the method of any one of the above-described embodiments. For example, the control unit may be configured to instruct a driver of said vehicle to use the generator for decelerating the vehicle, for example by displaying a message on a display, for example a display on a navigation system. The system may also be configured to determine activation times of at least one load of the electric system depending on when the generator generates electrical energy.

In an embodiment, the generator in a first mode of operation may be used to drive the car, i.e. serve as an electric motor, when receiving electric power for example from a battery, and in a second mode, may be used as a generator to generate electric power by converting kinetic energy of the vehicle to electric power.

### Brief Description of the Drawings

Embodiments of the invention will be described with reference to the accompanying drawings.
Fig. 1 is a schematic block diagram showing a system according to an embodiment and an example for an environment thereof.
Fig. 2 shows a flowchart illustrating an embodiment of a method.
Fig. 3 is a diagram illustrating some features of some embodiments of the invention.
Fig. 4 is a further diagram illustrating some features of some embodiments of the invention.

### Detailed Description of Preferred Embodiments

Embodiments of the invention will be described with reference to the drawings. It should be noted that features of different embodiments described herein may be combined with each other unless specifically stated otherwise.

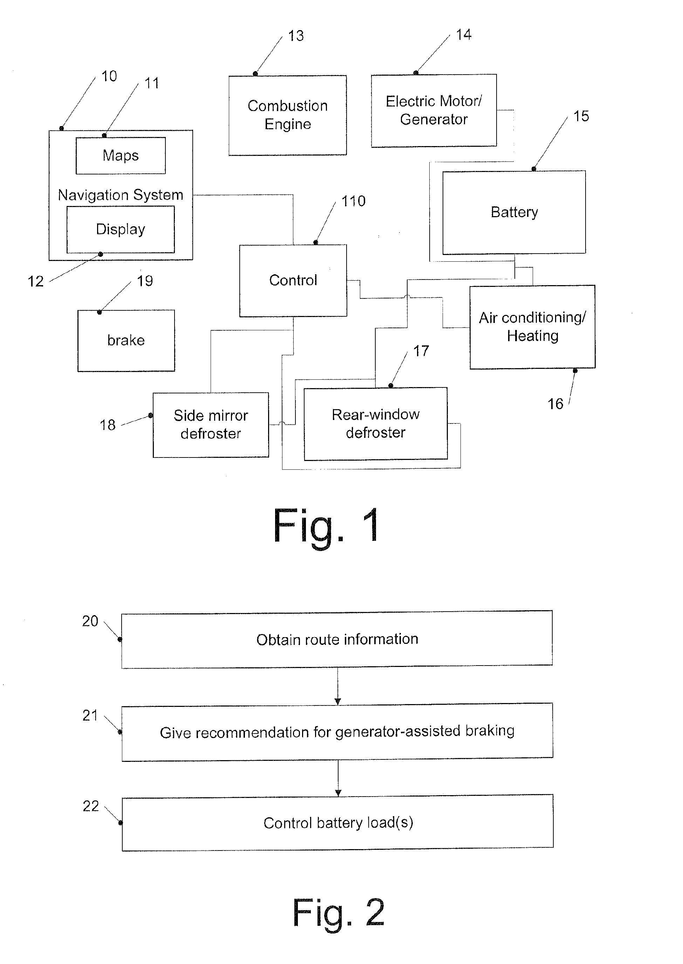

In Fig. 1, an embodiment of a system is shown, the system comprising a navigation system 10 and a control unit 110. Furthermore, elements of a vehicle, for example a car, in which the system is incorporated are also shown in Fig. 1.

In the example of Fig. 1, the vehicle is a hybrid vehicle comprising a combustion engine 13 and an electric motor 14 which alternatively may be used to drive the vehicle. Electric motor 14 is coupled with a battery 15 to receive electric power therefrom to drive the vehicle in a first mode of operation. In a second mode of operation, electric motor 14 may be used as a generator for converting kinetic energy of the vehicle to electric energy. It should be noted that in other embodiments, the vehicle may be a purely electric vehicle without combustion engine. In still other embodiments, the vehicle may comprise a separate generator.

Further connected to battery 15 are various loads, of which an air conditioning/heating 16, a rear window defroster 17 and a side mirror defroster 18 are shown as examples. Furthermore, the vehicle comprises a brake 19 for decelerating the vehicle.

In the embodiment shown in Fig. 1, control 110 is configured to manage a use of the electric system of the vehicle, the electric system in the example of Fig. 1 comprising electric motor/generator 14, battery 15, air conditioning/heating 16, rear window defroster 17, and side mirror defroster 18.

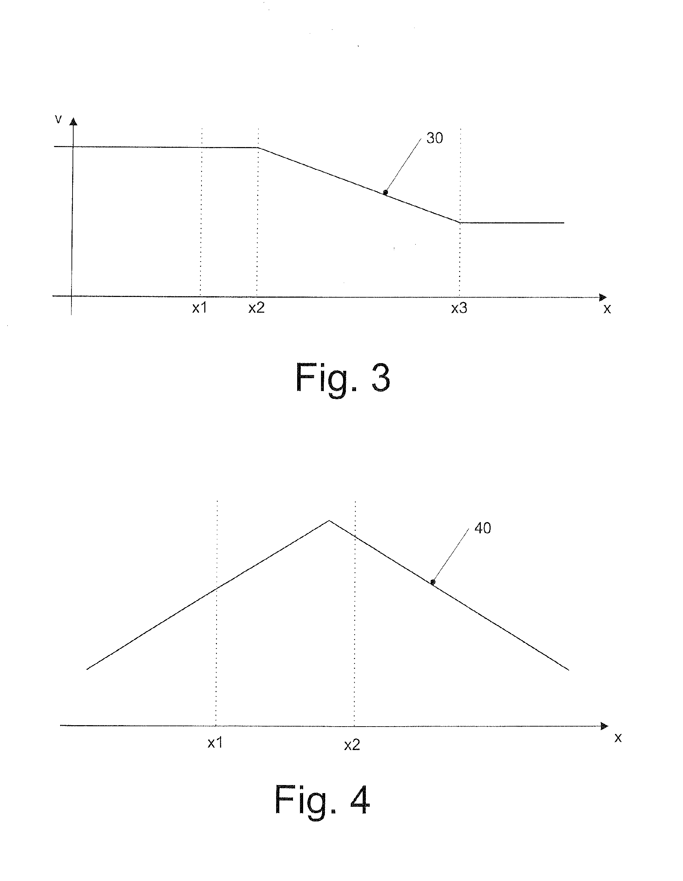

In an embodiment, control 110 receives information regarding a route about to be taken by the vehicle from navigation system 10. For example, navigation system 10 in the embodiment of Fig. 10 has maps 11 stored therein from which for example information regarding slopes, curves in the roads, upcoming speed limits, upcoming congestions and the like can be taken. In response to the route information, control 110 may give recommendations to a driver of the vehicle, for example via displaying them on display 12 of navigation system 10, when to engage electric motor 14 for decelerating the vehicle or, in other words, for generator assisted braking. In other words, by warning a user sufficiently early of an upcoming tempo limit, no rapid deceleration using brake 19 is needed, but a comparatively slow deceleration where generator 14 converts the kinetic energy of the vehicle at least in part into electric energy which may be stored in battery 15 or directly used by loads like air conditioning/heating 16, rear window defroster 17 or side mirror defroster 18 becomes possible. In some embodiments, depending on the route an instruction to engage generator 14 for decelerating the vehicle may be preceded or followed by an instruction to let the vehicle run in free-wheel mode, i.e. with brake 19, combustion engine 13 and electric motor/generator 14 being disengaged. Some examples for this will be discussed later with reference to Figs. 3 and 4.

Furthermore, in some embodiments when deciding on which instructions to give to a user, preferences to a user can be taken into account. For example, a long deceleration using generator 14 may lead to a longer overall travel time than approaching a speed limit with high velocity and then performing a rapid deceleration using brake 19. When the driver indicates that speed is important, but energy consumption less-so, the recommendations may be changed to use for example brake 19 at least in some circumstances.

Additionally or alternatively, in the embodiment of Fig. 1 control unit 110 may control loads like air conditioning/heating 16, rear window defroster 17 or side mirror defroster 18 by determining their activation times depending on when generator 14 generates electrical energy, e.g. to be active preferably during times when generator 14 generates electric energy. Activating these loads preferably when generator 14 generates electrical energy in this case means e.g. to activate the loads as far as possible only during periods the generator generates electrical energy to obtain a goal associated with the load. For example, a goal associated with air conditioning/heating 16 may be to regulate the temperature in the vehicle to a set temperature. If obtaining this temperature can be reached while only activating air conditioning/heating 16 when generator 14 generates electrical energy, this is the most preferred alternative. However, in some situations, for example when the vehicle runs at a constant speed for a longer period of time, generator 14 may be disengaged over the whole time, and it may be necessary to activate air conditioning/heating 16 nevertheless to keep the temperature stable. Similar considerations hold true for rear window defroster 17 and side mirror defroster 18, which may be activated as far as possible only when generator 14 generates electrical energy while sill reaching the goal of defrosting or defogging the rear window or the side mirror, respectively.

The embodiment shown in Fig. 1 serves merely as an example, and other implementations are equally possible. For example, control 110 need not be a separate unit, but may for example be a microprocessor of navigation system 10. Moreover, in some embodiments control 110 may only be configured to give a driver instructions regarding the use of generator for braking, while in other embodiments, control 110 may only control loads of battery 15 to be active preferably when generator 14 is active.

In other embodiments, additionally or alternatively information regarding the route about to be taken by the vehicle may be acquired from other sources than navigation system 10, for example via a camera mounted to the vehicle or through receiving route information via a wireless communication channel, for example via a wireless internet connection. Also, a driver may be given recommendations for engaging generator 14 for decelerating the vehicle not only via a display of the navigation system like display browse, but also via other displays in the vehicle or through audio messages output via a loudspeaker, for example. In view of the many variations possible, the invention is not to be construed as being limited to the embodiment shown in Fig. 1.

In Fig. 2, a flowchart illustrating a method according to an embodiment is shown. The method depicted in Fig. 2 may be implemented in the system shown in Fig. 1, but may also be implemented independently therefrom.

At 20, route information describing a route to be taken by a vehicle is obtained. The route information may for example comprise information regarding upcoming speed limits, information regarding slopes, information regarding curves or information regarding congestions.

At 21, recommendations are given to a driver of the vehicle for generator-assisted braking, i.e. for decelerating the vehicle by engaging a generator which converts kinetic energy of the vehicle to electric energy, based on the route information.

At 22, one or more loads of a battery of the vehicle are controlled to be active preferably, for example if possible only, during times when the generator generates electric energy. In particular, the loads may be loads which can be operated only in some time intervals and still reaching the goal associated with the load, for example an air conditioning/heating or a defroster.

It should be noted that the actions described at 21 and the actions described at 22 may be performed independently from each other. For example, at 22 based on the route information alone times when a generator will likely be active may be estimated, and the battery loads may be controlled to be active during these estimated times.

Next, some examples for giving recommendations to a driver for generator assisted deceleration of a vehicle as mentioned with respect to the embodiments of Fig. 1 and Fig. 2 and for corresponding control of loads will be given with reference to Fig. 3 and Fig. 4.

In Fig. 3, a curve 30 shows the velocity v of a vehicle over a distance x. It is assumed that at x3 a sign indicating a speed limit is situated. For example, such a sign may be a dedicated speed limit sign or also the beginning of a village.

In the simple example of Fig. 3, it is assumed that the vehicle starts with a first constant velocity exceeding the velocity allowed after x3 and therefore has to decelerate. In an embodiment, by using only a generator for deceleration, the deceleration has to start at x2 to reach the target velocity at x3. Therefore, in an embodiment at x1, i.e. a predetermined distance or predetermined driving time prior to reaching x2, the driver of the vehicle is advised to engage the generator for deceleration soon. At x2, a further message may be displayed advising the driver to engage the generator now. In this way, as much as possible of the kinetic energy of the vehicle is converted to electric energy by the generator.

In an embodiment as described with reference to Fig. 3, then for example between x2 and x3 when the generator generates electric energy, loads like air conditioning/heating 16, rear window defroster 17 or side mirror defroster 18 may be activated in order to directly use the electric energy generated by the generator without needing to intermediately store the energy in a battery like battery 15 of Fig. 1.

In Fig. 4, a further illustrative example is shown. In Fig. 4, the altitude of a road is shown as a curve 40 depending on location x. In other words, in the example of Fig. 4 there is first an ascending slope followed by a descending slope.

In an example, a vehicle approaches the peak between ascending slope and descending slope of curve 40 with a certain velocity. At x1, which is a location having a distance to the peak which may depend on the velocity, the driver is advised to enter a free-wheel mode, i.e. disengage an engine used (for example combustion engine 13 or electric motor 14 of Fig. 1). The location x1 is chosen that the peak of the road is still reached with a sufficient predetermined velocity. As soon as the vehicle reaches the descending slope, as in the example shown, it accelerates. At x2 in the example shown, the driver is advised to engage a generator like generator 14 for decelerating the vehicle or, in other words, to counter the accelerating effect of the descending slope. It should be noted that in case of descending slopes, depending on the inclination some braking e.g. via brake 19 of Fig. 1 or periods where the generator is disengaged again may be necessary to obtain for example a desired average velocity.

In the example of Fig. 4, when the generator is engaged for deceleration at x2, loads of a battery like 16, 17 and 18 of Fig. 1 may be activated.

It should be noted that the examples shown in Fig. 3 and 4 only serve to illustrate some concepts discussed with reference to Fig. 1 and Fig. 2 further and are not to be construed as limiting. In particular, the discussed concepts may also be used in other roads and situations, for example in curves when, for example based on a current velocity and a radius of the curve, a deceleration is necessary, or in case of upcoming congestions, where also a deceleration before reaching the beginning of the congestion may be necessary. Therefore, the scope of the present application is not limited to the examples and embodiments described above.

## Claims

1. A method, comprising:
obtaining route information describing a route to be taken by a vehicle, and
managing a use of an electric system of said vehicle, said electric system comprising a generator (14), based on said route information.

2. The method of claim 1,
wherein said managing comprises instructing a driver of said vehicle to use said generator (14) for decelerating said vehicle.

3. The method of claim 2,
wherein said instructing comprises instructing the driver to use said generator (14) for deceleration at a point where a target velocity at a target location is reached using only the generator (14) for deceleration.

4. The method of claim 2 or 3,
wherein said instructing comprises instructing the driver to use said generator (14) for deceleration when said vehicle runs downhill.

5. The method of any one of claims 1 to 4,
wherein said electric system comprises loads,
wherein said managing comprises determining activation times of at least one load (16, 17, 18) of said loads depending on when said generator (14) generates electrical energy.

6. The method of claim 5,
wherein said at least one load comprises at least one of an air conditioning (16), a heating (16), a rear window defroster (17) and a side mirror defroster (18).

7. The method of any one of claims 1 to 6,
wherein said obtaining said route information comprises obtaining said route information from a navigation system (10).

8. The method of any one of claims 1 to 7,
wherein said generator (14) operates as a generator converting kinetic energy of the vehicle to electric energy in a first mode of operation or as an electric motor converting electrical energy into kinetic energy of the vehicle in a second mode of operation.

9. A system, comprising:
- a route information obtaining unit (10) configured to obtain route information describing a route to be taken by a vehicle, and
- a control unit (110) configured to manage a use of an electric system of said vehicle, said electric system comprising a generator (14), based on said route information.

10. The system of claim 9,
wherein said control unit (110) is configured to instruct a driver of said vehicle to use said generator (14) for decelerating said vehicle.

11. The system of claim 9 or 10,
wherein said electric system comprises loads,
wherein said control unit (110) is configured to determine activation times of at least one load (16, 17, 18) of said loads depending on when said generator (14) generates electrical energy.

12. The system of any one of claims 9 to 11,
wherein said route information obtaining unit comprises a navigation system (10).

13. System according to any one of claims 9 to 12,
wherein said system is configured to perform the method of any one of claims 1 to 8.

14. Vehicle, comprising a system as according to any one of claims 9 to 13.

15. The vehicle according to claim 14,
wherein said vehicle is one of an electrical vehicle and a hybrid vehicle.
